# EUROPÄISCHE PATENTSCHRIFT

(11) **EP 3 354 504 B1**
(45) Veröffentlichungstag und Bekanntmachung des Hinweises auf die Patenterteilung: **27.10.2021**
(21) Anmeldenummer: 17191317.1
(22) Anmeldetag: 15.09.2017
(51) Int. Cl.: B60K 6/48

(54) **ANTRIEBSSTRANGSYSTEM**
POWERTRAIN SYSTEM
SYSTÈME D'ENTRAINEMENT DU GROUPE MOTOPROPULSEUR

(30) Priorität: 15.09.2016 DE 102016217616
(43) Veröffentlichungstag der Anmeldung: 01.08.2018
(60) Teilanmeldung: 21181184.9
(73) Patentinhaber: Deere & Company, Moline, IL 61265 (US)
(72) Erfinder: Woopen, Thomas, 68163 Mannheim (DE)
(74) Vertreter: Dehnhardt, Florian Christopher

(56) Entgegenhaltungen:
- EP-A1- 0 812 720
- DE-A1- 10 319 681
- DE-A1-102009 034 586
- US-A1- 2007 034 427

## Beschreibung

Die Erfindung betrifft ein Antriebsstrangsystem zum Bereitstellen von Antriebsleistung für ein Fahrzeug, insbesondere für ein landwirtschaftliches Fahrzeug.

Ein Antriebsstrang besteht aus einem Antrieb und mechanischen Komponenten, wie eine Kurbelwelle, ein Getriebe, ein Differential, welche die Leistung des Antriebs bis auf den Fahruntergrund übertragen. Beim Antrieb kann es sich um einen Verbrennungsmotor oder einen Elektromotor handeln, oder eine sogenannte Hybridlösung.

US2015/0210151 A1 beschreibt einen Traktor mit einer Batterie in Verbindung mit einem elektrischen Generator und einem Elektromotor, und mit einem ersten Motor / Generator, der mit dem Motor verbunden ist, und mit dem die Batterie verbunden ist. Der erste Motor / Generator kann als ein Motor betrieben werden, so dass die Abtriebswelle mindestens teilweise durch elektrische Energie von der Batterie gespeist wird. Die EP-A-0 812 720 zeigt einen Schlepper mit zwei Umlaufrädergetrieben und zwei elektrischen Maschinen an der Hinterachse. Weitere Konstruktionen sind bekannt aus der DE 103 19 681 A und der DE 10 2009 034 686 A.

In landwirtschaftlichen Fahrzeugen besteht der Bedarf, den Antrieb flexibel an Leistungsanforderungen anzupassen und gleichzeitig den Fahrkomfort zu erhöhen.

Es ist somit eine Aufgabe der vorliegenden Erfindung, die Flexibilität der Leistungsanpassung zu verbessern.

Eine weitere Aufgabe ist die Verbesserung des Fahrkomforts.

Eine weitere Aufgabe ist die Erhöhung der Sicherheit beim Betrieb des Fahrzeugs.

Ausführungen der Erfindung ergeben sich nach dem Anspruch 1 sowie den abhängigen Ansprüchen.

Durch die angetriebene Vorder- und Hinterachse wird ein Vierrad-Antrieb sichergestellt. Jedoch können auch, je nach vorhandener Achsanzahl mehr als vier Räder oder Kettenräder angetrieben sein.

Die Erfindung betrifft ein Antriebsstrangsystem, das wenigstens einen Verbrennungsmotor, wenigstens einen Generator, zur Erzeugung elektrischer Energie, angetrieben durch den Verbrennungsmotor, wenigstens zwei elektrische Maschinen, die mit dem Generator verbunden sind, wenigstens je eine angetriebene Vorder- und Hinterachse, die jeweils Abtriebsmittel aufweisen, und die durch den Verbrennungsmotor angetrieben sind, wenigstens ein Getriebe, das im Antriebsstrang zwischen dem Verbrennungsmotor und den jeweiligen Achsen vorgesehen ist, und wenigstens zwei Umlaufrädergetriebe aufweisen kann. Die Umlaufrädergetriebe sind jeweils mit den Abtriebsmitteln der Vorderachse, mit einem Vorderachsdifferential und mit jeweils einer der elektrischen Maschinen verbunden. Die Antriebskraft des Verbrennungsmotors und der elektrischen Maschinen wird im jeweiligen Umlaufrädergetriebe summiert und an die jeweiligen Abtriebsmittel der Vorderachse geleitet und die Abtriebsmittel der Vorderachse sind durch den Verbrennungsmotor und durch die elektrischen Maschinen gleichzeitig angetrieben.

Mit dem Antriebsstrangsystem kann die Antriebsleistung in Form von elektrischer und von mechanischer Leistung an die Vorderachse geleitet werden. Beide Leistungsarten überlagern sich im Umlaufrädergetriebe. Bei jeglicher Umsetzung von mechanischer Energie in elektrische Energie findet ein Leistungsverlust aufgrund der auftretenden elektrischen Verluste im Generator statt. Im Vergleich zu einem rein elektrischen Antriebsstrangsystem kann der Wirkungsgrad des Systems erhöht werden, da ein Anteil der Antriebsleistung über einen mechanischen Pfad an die Vorderachse geleitet wird.

Die elektrische Maschine ist nicht zum alleinigen Betrieb der Vorderachse vorgesehen. Somit kann die elektrische Maschine verkleinert werden, wobei gleichzeitig das Gewicht reduziert wird.

Die Umlaufrädergetriebe sind im Antriebsstrang vom Verbrennungsmotor ausgehend hinter einem Vorderachsdifferential vorgesehen. Jedes Umlaufrädergetriebe kann mit den Abtriebsmitteln einer Fahrzeugseite der Vorderachse verbunden sein. Die Gesamtleistung von elektrischer und mechanischer Leistung wird hinter dem Vorderachsdifferential zur Verfügung gestellt. Im Falle einer Boostfunktion können die Abtriebsmittel mit einer kurzzeitig erhöhten elektrischen Leistung direkt versorgt werden. Das Vorderachsdifferential und das Schalt-/Automatikgetriebe können für eine kleinere Leistung ausgelegt werden und diese können eine kleinere Baugröße sowie ein geringeres Gewicht aufweisen.

Bei einer weiteren Ausführung können der Generator und wenigstens eine elektrische Maschine mit wenigstens einem Energiespeicher, einem Akkumulator oder einer Batterie verbunden sein.

Durch das Verbinden kann der Generator den Energiespeicher aufladen und elektrische Energie für eine spätere Verwendung speichern. In einem Betriebsmodus, in dem nur eine geringe elektrische Leistung im Abtrieb benötigt wird, kann daher die elektrische Leistung wenigstens teilweise in den Energiespeicher, den Akkumulator oder die Batterie geleitet werden. Diese steht für einen späteren Abruf bei Leistungsbedarf zur Verfügung.

In einer weiteren Ausführung kann eine Steuerung vorgesehen sein, die dazu ausgelegt ist, das Umlaufrädergetriebe zu steuern.

Die Steuerung regelt die Relativdrehzahl einzelner Komponenten des Umlaufrädergetriebes. Die Summierung von elektrischer und mechanischer Leistung kann eingestellt werden. Es kann im Bedarfsfall eine Boostfunktion realisiert werden, die kurzzeitig eine hohe elektrische Leistung zur Verfügung stellt.

Durch die Steuerung kann die Leistungsverteilung zwischen der Vorder- und der Hinterachse geregelt werden. Es ist somit möglich, eine flexible Leistungsverteilung zu realisieren, die an den aktuellen Lastfall angepasst ist. Dies kann durch das Einstellen der Relativdrehzahlen des Umlaufrädergetriebes erfolgen. Es kann beliebig zwischen einem Drei-Wellen-Betrieb und einem Zwei-Wellen-Betrieb umgeschaltet werden.

Bei einer weiteren Ausführung kann das Umlaufrädergetriebe ein Planetengetriebe sein.

Mit dem Planetengetriebe kann hohes Drehmoment übertragen werden. Die Steuerung kann über die Regelung eines Hohlrads oder eines Planetenträgers realisiert werden. Durch das Einstellen der Relativdrehzahlen der Komponenten des Planetengetriebes kann der Anteil der elektrischen Leistung und die Leistungsverteilung zwischen Vorder- und Hinterachse beeinflusst werden.

In einer weiteren Ausführung können die Abtriebsmittel Endgetriebe in Form von einem Umlaufrädergetriebe, Differentialgetriebe oder Stirnradgetriebe aufweisen.

Die Abtriebsmittel sind in den Radnaben oder Kettenradnaben vorgesehen und dienen zur Untersetzung der Eingangsdrehzahl, um eine weitere Drehmomenterhöhung in den Rädern oder Kettenrädern zu erzeugen. Der Antriebsstrang kann eine hohe Spreizung des Antriebsmoments sicherstellen und erlaubt einen breiten Anwendungsbereich für hohe Zuglasten.

Bei einer Ausführung kann das Antriebsstrangsystem derart ausgelegt sein, dass bei einem Bremsvorgang eine Rekuperation der Antriebsleistung erfolgt. Es kann ein Anteil der durch den Bremsvorgang anfallenden Leistung mittels der elektrischen Maschine wieder in elektrischen Strom umgewandelt werden. Die elektrische Maschine im Generatormodus erzeugt aus der durch den Bremsvorgang anliegenden Drehzahl und dem anliegenden Drehmoment Strom, der an den Energiespeicher weitergeleitet werden kann. Somit steht ein Teil der Bremsleistung zu einem späteren Zeitpunkt erneut zur Verfügung.

Weitere Ausführungen werden anhand der Figuren beschrieben. Dabei zeigt
Figur 1 ein Fahrzeug für das Antriebsstrangsystem nach einer Ausführung,
Figur 2 ein nicht erfindungsgemäßes Antriebsstrangsystem für ein Fahrzeug,
Figur 3 ein Antriebsstrangsystem nach der Erfindung.

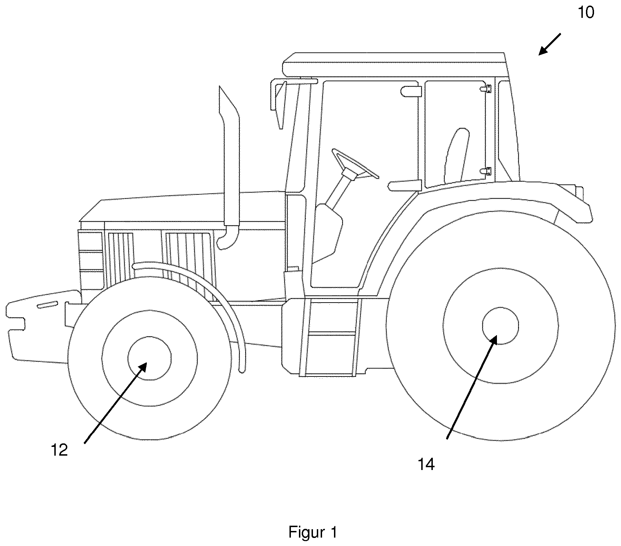

Eine Ausführung kann in einem in **Figur 1** gezeigten Traktor 10 verwendet werden. Ein üblicher Traktor 10 nach Figur 1 weist einen Verbrennungsmotor 21 auf, und jeweils eine Vorder- und Hinterachse. An den Achsen befinden sich Räder, jedoch kann es auch vorgesehen sein, statt Rädern Ketten- oder Raupenantriebe vorzusehen.

Das Antriebsstrangsystem 20 ist dazu geeignet, in einer Feldspritze, einer Baumaschine, oder einem weiteren landwirtschaftlichen Fahrzeug verwendet zu werden. Weiterhin ist es möglich, eine Ausführung des Antriebsstrangsystems 20 nicht nur mit zwei Achsen, sondern mit wenigstens zwei Hinterachsen zu betreiben. Gerade in diesen Anwendungsbereichen kann es vorteilhaft sein, wenn durch eine Ausführung des Antriebsstrangsystems 20 eine zusätzliche elektrisch erzeugte Antriebsleistung im Bedarfsfall auf die Vorderräder aufgebracht werden kann.

Durch das Antriebsstrangsystem 20 wird sowohl die Vorderachse 12, als auch die Hinterachse 14, durch den mechanischen Leistungspfad angetrieben, so dass die mechanisch erzeugte Leistung des Verbrennungsmotors 21 mittels eines Schalt- /Automatikgetriebes 30, einem Vorderachsdifferential 27 und einem Hinterachsdifferential 29 an die Räder geleitet wird.

Durch das Antriebsstrangsystems 20 werden die Vorderräder zusätzlich mit einer auf elektrischem Wege erzeugten Leistung beaufschlagt. Hierfür ist ein Generator 22 vorgesehen, der mechanisch mit dem Verbrennungsmotor 21 verbunden ist. Durch die Antriebsleistung des Verbrennungsmotors 21 erzeugt der Generator 22 elektrischen Strom, welcher dann für eine zusätzliche Leistungsbeaufschlagung der Vorderachse 12 zur Verfügung gestellt wird.

Dabei kann der elektrische Strom zunächst in einem Energiespeicher 34 gespeichert werden, bevor dieser im Anwendungsfall zur Leistungsgenerierung verwendet wird. Es kann jedoch auch vorgesehen sein, keinen Energiespeicher 34 unterzubringen, so dass der elektrische Strom vom Generator 22 direkt zur Leistungserzeugung genutzt wird.

Der elektrische Strom wird vom Generator 22 oder vom Energiespeicher 34 kommend an eine oder mehrere elektrische Maschinen 23, 24 weitergeleitet, welche aus dem elektrischen Strom wiederum Antriebsleistung erzeugen und somit die Vorderachse 12 zusätzlich zu der Leistung des mechanischen Pfades mit einer Leistung aus dem elektrischen Pfad beaufschlagen.

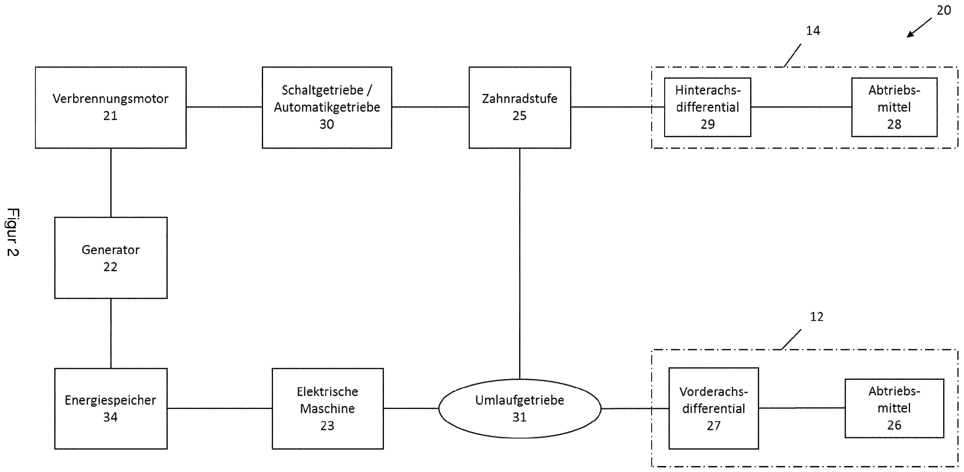

**Figur 2** zeigt eine Ausführung eines nicht erfindungsgemäßen Antriebsstrangsystems 20. Das Antriebsstrangsystem weist dabei einen Verbrennungsmotor 21 auf. In Verbindung mit dem Verbrennungsmotor 21 ist weiterhin ein Schalt-oder Automatikgetriebe 30 vorgesehen. Das Getriebe 30 dient dazu, die Leistung in Drehmoment und Drehzahl an den Bedarfsfall anzupassen. Durch eine Zahnradstufe 25 wird die mechanisch erzeugte Leistung des Verbrennungsmotors 21 auf einen Vorderachs- und/oder Hinterachsantrieb aufgeteilt. Der Antrieb der Hinterachse 14 weist dabei üblicherweise ein Hinterachsdifferential 29 auf, an das die Abtriebsmittel 28 der Hinterachse angeschlossen sind. Dabei können die Abtriebsmittel aus einem Differenzialgetriebe, einem Planetengetriebe oder einem Umlaufrädergetriebe bestehen, und dienen dazu, die Drehzahl und/oder das Drehmoment nochmals zu modifizieren, bevor es an die Räder geleitet wird.

Der mechanische Leistungspfad für die Vorderachse 12 weist im Anschluss an die Zahnradstufe 25 ein Umlaufrädergetriebe 31 auf. Das Umlaufrädergetriebe 31 dient dazu, die Leistung aus dem mechanischen Pfad und aus dem elektrischen Pfad zu summieren und an ein Vorderachsdifferential 27 zu leiten. Ausgehend vom Vorderachsdifferential 27 wird die Leistung an die Abtriebsmittel 26 der Vorderachse weitergeleitet. Diese haben die gleiche Funktion wie die Abtriebsmittel 28 der Hinterachse.

Durch den Verbrennungsmotor 21 wird ein Generator 22 angetrieben, der mechanisch mit dem Verbrennungsmotor 21 verbunden ist. Der Generator 22 kann dabei ein Elektromotor üblicher Bauart sein, oder ein Generator spezieller Bauart, wie etwa ein Klauenpolgenerator. Der Generator 22 erzeugt elektrischen Strom, der an einen Energiespeicher 34 weitergeleitet und dort gespeichert werden kann. Der Energiespeicher kann dabei eine übliche Batterie oder ein Akkumulator sein.

Eine elektrische Maschine 23 ist an den Energiespeicher 34 angeschlossen und wird von diesem mit elektrischer Leistung versorgt oder direkt vom Generator 22. Die elektrische Maschine 23 kann als Motor betrieben werden, wobei durch die elektrische Leistung ein Antriebsmoment erzeugt wird. Weiterhin kann die elektrische Maschine 23 auch als Generator betrieben werden, sodass durch das Einleiten von mechanischer Leistung in die elektrische Maschine 23 ein elektrischer Strom erzeugt werden kann.

Die elektrische Maschine 23 ist auf ihrer mechanischen Seite mit dem Umlaufrädergetriebe 31 verbunden. In dem Umlaufrädergetriebe 31 wird daher der mechanische Leistungspfad mit dem elektrischen Leistungspfad, der durch die elektrische Maschine 23 zur Verfügung gestellt wird, addiert und an die Vorderachse 12 geleitet.

Das Umlaufrädergetriebe 31 kann in Form eines Planetengetriebes ausgeführt sein. Das Umlaufrädergetriebe 31 kann im Zweiwellen- oder Dreiwellenbetrieb genutzt werden. Hierdurch ist es möglich, je nach Bedarfsfall zusätzlich die Leistung aus dem elektrischen Pfad wahlweise zu dosieren. Die elektrische Maschine 23 wird durch eine Steuerung 33 gesteuert, so dass die elektrische Maschine 23 durch ihren elektrischen Antrieb das Umlaufrädergetriebe 31 derart beeinflussen kann, dass die Leistung bedarfsgerecht summiert wird. Je nach Drehzahlunterschied der einzelnen Wellen des Umlaufrädergetriebes kann der Faktor der Summierung bestimmt werden.

Die Steuerung 33 kann dazu verwendet werden, den Generator 22 zu steuern, so dass dieser je nach Bedarfsfall abgeschaltet werden kann.

Durch den elektrischen Leistungspfad kann mithilfe der Steuerung 33 im Bedarfsfall zusätzliche elektrische Leistung auf die Vorderachse 12 geleitet werden. Der elektrische Leistungspfad führt nicht über das Getriebe 30, sodass dieses durch die summierte Leistung nicht belastet wird, sondern stets durch den mechanischen Leistungspfad, welcher ausschließlich durch den Verbrennungsmotor mechanisch angetrieben ist.

Durch die Steuerung des Umlaufrädergetriebes 31 kann auch eine Leistungsverteilung zwischen der Vorderachse 12 und der Hinterachse 14 erreicht werden. Durch die aktive Steuerung des Umlaufrädergetriebes 31 kann im Bedarfsfall die Leistung von der Vorderachse 12 auf die Hinterachse 14 umverteilt werden. Die Leistungsverteilung zwischen der Vorder- und der Hinterachse kann bedarfsgerecht gesteuert sein. Als Standardantrieb des Fahrzeugs kann die andauernde gleichzeitige Nutzung des elektrischen und des mechanischen Leistungspfades vorgesehen sein bei einer sich verändernden Leistungsverteilung zwischen der Vorder- und der Hinterachse.

Mit der zusätzlichen elektrischen Leistung kann die Vorderachse mit einem Prerun ausgestattet werden. Die Abtriebsmittel der Vorderachse 12 drehen dabei mit einer höheren oder niedrigeren Drehzahl als diejenigen der Hinterachse. Das Fahrzeug kann damit bei Kurvenfahrt ein besseres Ansprechverhalten aufweisen. Durch eine niedrigere Drehzahl kann ein besseres Abbremsverhalten des Fahrzeugs erreicht werden, gerade auch bei höheren Geschwindigkeiten oder bei einer hohen anhängigen Last.

Beim Abbremsvorgang kann ein Anteil der Leistung durch die elektrische Maschine 23 im Generatorbetrieb in elektrischen Strom gewandelt und im Energiespeicher 34 gespeichert werden.

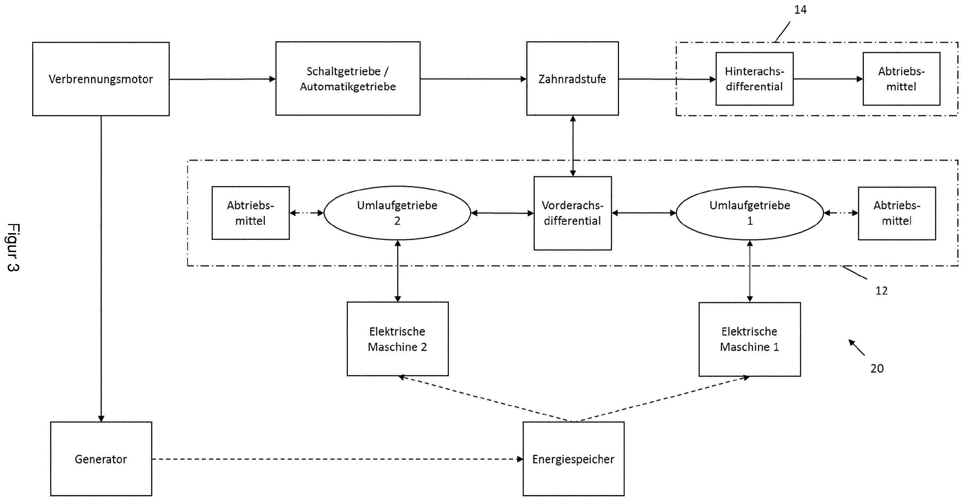

**Figur 3** zeigt eine erfindungsgemäße Ausführung des Antriebsstrangsystems. Dabei unterscheidet sich diese Ausführung von derjenigen nach Figur 2 durch die Verwendung von zwei Umlaufrädergetrieben 31, 32.

Entsprechend der Ausführung nach Figur 1 wird durch den Verbrennungsmotor 21 ein Generator 22 zur Erzeugung von elektrischem Strom angetrieben. Der Verbrennungsmotor 21 erzeugt mechanische Leistung, die über ein Schalt-/Automatikgetriebe 30 und über eine Zahnradstufe 25 eines Vierradantriebs an eine Vorder- und Hinterachse 12, 14 geleitet wird. Mit der Zahnradstufe 25 ist ein Vorderachsdifferential 27 verbunden, welches wiederum an zwei Umlaufrädergetriebe 31, 32 angeschlossen ist. Durch das Vorderachsdifferential 27 wird die Leistung in die zwei Umlaufrädergetriebe 31, 32 eingeleitet.

Der Generator 22 kann mit einem Energiespeicher 34 verbunden sein. Dadurch kann elektrische Leistung für einen späteren Anwendungsfall gespeichert werden. Der Energiespeicher 34 und der Generator 22 sind mit zwei elektrischen Maschinen 23, 24 verbunden, so dass die elektrische Energie an die elektrischen Maschinen 23, 24 geleitet werden kann. Die elektrischen Maschinen 23, 24 sind mit einer Steuerung 33 verbunden. Durch die zwei Umlaufrädergetriebe 31, 32 wird auf beiden Seiten der Vorderachse 12 der elektrische Leistungspfad mit dem mechanischen Leistungspfad überlagert und an die Abtriebsmittel 26 weitergeleitet. Dadurch kann, wie in der Ausführung nach Figur 1, elektrische Leistung zusätzlich für den Antrieb der Vorderachse 12 genutzt werden.

Durch die zwei Umlaufrädergetriebe 31, 32 und die zwei elektrischen Maschinen 23, 24 können beide Seiten der Vorderachse 12 des Fahrzeugs unabhängig voneinander gesteuert werden. Je nach erforderlicher Fahrsituation kann eine Seite des Fahrzeugs mit mehr oder weniger Antriebsleistung versorgt werden, wodurch ein aktives Lenken realisiert werden kann. Durch das gezielte Beschleunigen und Abbremsen kann auch bei hoher Geschwindigkeit die Fahrstabilität erhöht werden.

Bei auftretenden Seitenkräften oder instabilen Fahrzuständen kann durch eine Drehzahl/Drehmomentanpassung auf beiden Seiten der Vorderachse 12 ein stabilisierender Zustand hergestellt werden. Gerade im landwirtschaftlichen Bereich mit hohen Anhängelasten kann die Fahrsicherheit erhöht werden. Durch ein aktives Lenkunterstützen oder durch ein aktives Abbremsen kann das Fahrzeug stets in einen sicheren dynamischen Bereich zurückgeleitet werden.

Durch die Ausführungen des Antriebsstrangsystems 20 kann während dem Schaltvorgang des Schalt-/Automatikgetriebes 30 eine Zugkraftunterbrechung vermieden werden. Während der mechanische Leistungspfad durch den Schaltvorgang unterbrochen wird, erfolgt eine konstante Leistungsbereitstellung über den elektrischen Leistungspfad.

## Patentansprüche

1. Antriebsstrangsystem (20),
aufweisend
wenigstens einen Verbrennungsmotor (21),
wenigstens einen Generator (22), zur Erzeugung elektrischer Energie, angetrieben durch den Verbrennungsmotor (21),
wenigstens zwei elektrische Maschinen (23, 24), die mit dem Generator (22) verbunden sind,
wenigstens eine angetriebene Vorder- und Hinterachse (12, 14), die jeweils Abtriebsmittel (26, 28) aufweisen, und die durch den Verbrennungsmotor (21) angetrieben sind,
wenigstens ein Schalt-/Automatikgetriebe (30), das im Antriebsstrang zwischen dem Verbrennungsmotor (21) und den jeweiligen Achsen vorgesehen ist,
wenigstens zwei Umlaufrädergetriebe (31, 32), die jeweils mit den Abtriebsmitteln (26) der Vorderachse (12), mit einem Vorderachsdifferential (27), und mit jeweils einer der elektrischen Maschinen (23, 24) verbunden sind,
so dass die Antriebskraft des Verbrennungsmotors (21) und der elektrischen Maschinen (23, 24) im jeweiligen Umlaufrädergetriebe (31, 32) summiert und an die jeweiligen Abtriebsmittel (26) der Vorderachse (12) geleitet wird, und
die Abtriebsmittel (26) der Vorderachse (12) durch den Verbrennungsmotor (21) und durch die elektrischen Maschinen (23, 24) gleichzeitig angetrieben sind.

2. Antriebsstrangsystem (20) nach wenigstens einem der vorhergehenden Ansprüche, wobei der Generator (22) und wenigstens eine elektrische Maschine (23) mit wenigstens einem Energiespeicher (34), einem Akkumulator oder einer Batterie verbunden sind.

3. Antriebsstrangsystem (20) nach wenigstens einem der vorhergehenden Ansprüche, wobei eine Steuerung (33) vorgesehen ist, die dazu ausgelegt ist, das Umlaufrädergetriebe (31, 32) zu steuern.

4. Antriebsstrangsystem (20) nach wenigstens einem der vorhergehenden Ansprüche, wobei das Umlaufrädergetriebe (31) ein Planetengetriebe ist.

5. Antriebsstrangsystem (20) nach wenigstens einem der vorangehenden Ansprüche, wobei die Abtriebsmittel (26, 28) Endgetriebe in Form von einem Umlaufrädergetriebe, Differentialgetriebe oder Stirnradgetriebe aufweisen.

6. Antriebsstrangsystem (20) nach wenigstens einem der vorangehenden Ansprüche, das derart ausgelegt ist, dass bei einem Bremsvorgang eine Rekuperation der Antriebsleistung erfolgt.

## Claims

1. Drive train system (20),
having
at least one internal combustion engine (21),
at least one generator (22), for generating electrical energy, driven by the internal combustion engine (21), at least two electrical machines (23, 24) which are connected to the generator (22),
at least one driven front and rear axle (12, 14) which each have output means (26, 28) and which are driven by the internal combustion engine (21),
at least one manual/automatic transmission (30) which is provided in the drive train between the internal combustion engine (21) and the respective axles,
at least two epicyclic gear trains (31, 32) which are each connected to the output means (26) of the front axle (12), to a front axle differential (27) and to a respective one of the electrical machines (23, 24),
so that the drive force of the internal combustion engine (21) and of the electrical machines (23, 24) is added up in the respective epicyclic gear train (31, 32) and passed on to the respective output means (26) of the front axle (12), and
the output drive means (26) of the front axle (12) are driven by the internal combustion engine (21) and by the electrical machines (23, 24) at the same time.

2. Drive train system (20) according to at least one of the preceding claims, wherein the generator (22) and at least one electrical machine (23) are connected to at least one energy store (34), one storage battery or one battery.

3. Drive train system (20) according to at least one of the preceding claims, wherein a controller (33) is provided, which is designed to control the epicyclic gear train (31, 32).

4. Drive train system (20) according to at least one of the preceding claims, wherein the epicyclic gear train (31) is a planetary gear set.

5. Drive train system (20) according to at least one of the preceding claims, wherein the output means (26, 28) have a terminal gear mechanism in the form of an epicyclic gear train, differential gear mechanism or spur gear mechanism.

6. Drive train system (20) according to at least one of the preceding claims, which is designed in such a way that the drive power is recuperated during a braking process.

## Revendications

1. Système formant chaîne cinématique (20), comprenant au moins un moteur à combustion interne (21),
au moins un générateur (22) destiné à générer de l'énergie électrique et entraîné par le moteur à combustion interne (21),
au moins deux machines électriques (23, 24) qui sont reliées au générateur (22),
au moins un essieu entraîné avant et arrière (12, 14) qui comportent chacun des moyens de sortie (26, 28) et qui sont entraînés par le moteur à combustion interne (21), au moins une transmission manuelle/automatique (30) qui est prévue dans la chaîne cinématique entre le moteur à combustion interne (21) et les essieux respectifs,
au moins deux engrenages épicycloïdaux (31, 32) qui sont chacun reliés aux moyens de sortie (26) de l'essieu avant (12), à un différentiel d'essieu avant (27) et respectivement à l'une des machines électriques (23, 24), de sorte que la force d'entraînement du moteur à combustion interne (21) et celle des machines électriques (23, 24) soient additionnées dans les engrenages épicycloïdaux respectifs (31, 32) et amenées aux moyens de sortie respectifs (26) de l'essieu avant (12), et les moyens de sortie (26) de l'essieu avant (12) soient entraînés simultanément par le moteur à combustion interne (21) et par les machines électriques (23, 24).

2. Système formant chaîne cinématique (20) selon l'une au moins des revendications précédentes, le générateur (22) et au moins une machine électrique (23) étant reliés à au moins un accumulateur d'énergie (34), un accumulateur ou une batterie.

3. Système formant chaîne de transmission (20) selon l'une au moins des revendications précédentes, une commande (33) étant prévue qui est conçue pour commander l'engrenage épicycloïdal (31, 32).

4. Système formant chaîne cinématique (20) selon l'une au moins des revendications précédentes, l'engrenage épicycloïdal (31) étant un engrenage planétaire.

5. Système formant chaîne cinématique (20) selon l'une au moins des revendications précédentes, les moyens de sortie (26, 28) comportant des engrenages d'extrémité se présentant sous la forme d'un engrenage épicycloïdal, d'un engrenage différentiel ou d'un engrenage droit.

6. Système formant chaîne cinématique (20) selon l'une au moins des revendications précédentes, qui est conçu de telle sorte qu'une récupération de la puissance d'entraînement soit effectuée lors d'un processus de freinage.
